# EUROPÄISCHE PATENTSCHRIFT

(11) **EP 1 509 960 B1**
(45) Veröffentlichungstag und Bekanntmachung des Hinweises auf die Patenterteilung: **29.04.2015**
(21) Anmeldenummer: 03742922.2
(22) Anmeldetag: 15.01.2003
(51) Int. Cl.: H01M 2/16

(54) **ELEKTRISCHER SEPARATOR, VERFAHREN ZU DESSEN HERSTELLUNG UND VERWENDUNG**
ELECTRIC SEPARATOR, METHOD FOR THE PRODUCTION AND USE THEREOF
SEPARATEUR ELECTRIQUE, PROCEDE DE FABRICATION ET D'UTILISATION DUDIT SEPARATEUR

(30) Priorität: 26.02.2002 DE 10208277
(43) Veröffentlichungstag der Anmeldung: 02.03.2005
(73) Patentinhaber: Evonik Degussa GmbH, 45128 Essen (DE)
(72) Erfinder: HENNIGE, Volker, 48249 Dülmen (DE); HYING, Christian, 46414 Rhede (DE); HÖRPEL, Gerhard, 48301 Nottuln (DE)
(86) Internationale Anmeldenummer: PCT/EP2003/000329
(87) Internationale Veröffentlichungsnummer: WO 2003/073534

(56) Entgegenhaltungen:
- WO-A-99/15262
- WO-A-99/57769
- WO-A-2004/021477
- DE-A- 19 918 856
- US-A- 3 861 963
- US-A- 5 902 696
- US-B1- 6 335 114

## Beschreibung

Ein elektrischer Separator ist ein Separator, der in Batterien und anderen Anordnungen, in denen Elektroden, z. B. unter Aufrechterhaltung von Ionenleitfähigkeit, voneinander separiert werden müssen, eingesetzt wird.

Der Separator ist ein dünner, poröser, isolierender Stoff mit hoher Ionendurchlässigkeit, guter mechanischer Festigkeit und Langzeitstabilität gegen die im System, z. B. im Elektrolyten der Batterie, verwendeten Chemikalien und Lösungsmittel. Er soll in Batterien die Kathode von der Anode elektronisch völlig isolieren. Außerdem muss er dauerelastisch sein und den Bewegungen im System, z. B. im Elektrodenpaket beim Laden und Entladen, folgen.

Der Separator bestimmt maßgeblich die Lebensdauer der Anordnung, in der er verwendet wird, z. B. die von Batterie-Zellen. Die Entwicklung wiederaufladbarer Batterien wird daher durch die Entwicklung geeigneter Separatormaterialien geprägt.

Allgemeine Informationen über elektrische Separatoren und Batterien können z. B. bei J.O. Besenhard in "Handbook of Battery Materials" (VCH-Verlag, Weinheim 1999) nachgelesen werden.

Derzeitig eingesetzte Separatoren bestehen überwiegend aus porösen organischen Polymerfilmen bzw. aus anorganischen Vliesstoffen, wie z. B. Vliesen aus Glas- oder Keramik-Materialien oder auch Keramikpapieren. Diese werden von verschiedenen Firmen hergestellt. Wichtige Produzenten sind hier: Celgard, Tonen, Ube, Asahi, Binzer, Mitsubishi, Daramic und andere. Ein typischer organischer Separator besteht z. B. aus Polypropylen oder aus einem Polypropylen/Polyethylen/Polypropylen-Verbund.

Nachteile dieser organischen Polyolefinseparatoren sind deren relativ geringe thermische Belastbarkeit von deutlich unter 150 °C sowie Ihre geringe chemische Stabilität in anorganischen Lithium-Batteriezellen. Die verwendeten Polyolefine werden in den Li-Batterien beim Kontakt des Separators mit dem Lithium bzw. mit dem lithiierten Graphit langsam angegriffen. Bei Systemen mit einem Polymerelektrolyten kommt es deshalb zur Bildung einer dichten Oxidationsproduktschicht, die eine weitere Zerstörung des Separators in Li-Ionen-Batterien verhindert. In anorganischen Systemen bildet sich diese Schicht nicht, so dass es zur totalen Zerstörung kommt.

Für die Fertigung von Hochenergiebatterien bzw. Hochleistungsbatterien kann man keine Polymerelektrolyten mehr nutzen, da diese eine zu geringe Leitfähigkeit bei den entsprechenden Betriebstemperaturen besitzen. In diesen Batteriesystemen verwendet man nicht wässrige und nicht polymere Elektrolyte wie z. B. flüssiges Schwefeldioxid. In diesen Elektrolyten sind Polymerseparatoren aber chemisch nicht beständig, so dass diese nach einiger Zeit zerstört werden. Daher werden in diesen Systemen anorganische Separatoren (Glasvlies, Keramikvlies und Keramikpapier) mit den bekannten Nachteilen eingesetzt. Diese bestehen insbesondere darin, dass anorganische Keramik- oder Glasvliese nicht maschinell zu gewickelten Zellen verarbeitet werden können (da sie bei den vorgegebenen Zugspannungen immer zerreißen). Keramikpapiere sind sehr spröde und können aus diesem Grund nicht gewickelt werden bzw. zu gewickelten Zellen verarbeitet werden. Man beschränkt sich daher auf die Herstellung von prismatischen Zellen, bei denen die Elektroden/Separatoren nicht gewickelt sondern gestapelt werden. In dieser Anordnung ist es auch nicht notwendig, dass die Materialien entsprechend reißfest sind.

Es gibt erste Versuche anorganische Verbundmaterialien als Separatoren einzusetzen. So wird in DE 198 38 800 ein elektrischer Separator, der ein flächiges, mit einer Vielzahl von Öffnungen versehenes, flexibles Substrat mit einer darauf befindlichen Beschichtung umfasst, welcher dadurch gekennzeichnet ist, dass das Material des Substrates ausgewählt ist aus Metallen, Legierungen, Kunststoffen, Glas und Kohlefaser oder einer Kombination solcher Materialien und die Beschichtung eine flächig durchgehende, poröse, elektrisch nicht leitende keramische Beschichtung ist. Die Separatoren, die einen Support aus elektrisch leitendem Material aufweisen (wie im Beispiel angegeben), haben sich allerdings als ungeeignet für Lithium-Ionen-Zellen herausgestellt, da die Beschichtung in der beschriebenen Dicke nicht großflächig fehlerfrei hergestellt werden kann und es somit sehr leicht zu Kurzschlüssen kommt.

Zusammenfassend lässt sich feststellen, dass zur Zeit kein geeignetes Separatormaterial vorliegt, mit dem man insbesondere auch gewickelte anorganische Hochleistungs- bzw. Hochenergiebatterien kostengünstig produzieren kann.

In vorangehenden Arbeiten (DE 101 42 622) konnten wir zeigen, dass dies realisierbar ist mit einem Material, das, ein flächiges, mit einer Vielzahl von Öffnungen versehenes, flexibles Substrat mit einer auf und in diesem Substrat befindlichen Beschichtung umfasst, wobei das Material des Substrates ausgewählt ist aus gewebten oder ungewebten, nicht elektrisch leitfähigen Fasern von Glas oder Keramik oder einer Kombination solcher Materialien und die Beschichtung eine poröse, elektrisch isolierende, keramische Beschichtung ist, und wobei der resultierende Separator eine Dicke von kleiner 100 µm aufweist und biegbar ist, einen in Verbindung mit dem Elektrolyten genügend geringen Widerstand aufweist und trotzdem eine ausreichend große Langzeitbeständigkeit aufweist. Für eine Vielzahl von Anwendungen ist der Widerstand dieser Separatoren aber noch immer zu hoch, da als Träger ein Glasgewebe eingesetzt wird, das erstens zu dick ist und zweitens eine zu geringe Porosität aufweist.

Zudem ist dieser Separator nicht beständig gegenüber starken Basen, wie sie in NiMe-Hydrid und Silber-Zink-, und anderen Systemen als Elektrolyt verwendet werden. Separatormaterialien für solche Hochleistungssysteme müssen allerdings in starken Basen (40%ige KOH, Temperaturen zum Teil von mindestens 80 °C) beständig sein. Hier kann man prinzipiell zwar polymere Separatoren auf Basis von Polyolefinen einsetzen (dies wird auch zur Zeit gemacht), aber mit dem bekannten Nachteil der geringen thermischen Stabilität. Anorganische glasartige Materialien bzw. Keramische Materialien auf Silizium- bzw. Aluminium-Basis mit höherer thermischer Stabilität lösen sich dagegen im Elektrolyten.

Wünschenswert ist es, auch für diese Systeme einen gleichzeitig thermisch und chemisch beständigen Separator einsetzen zu können. Es war deshalb Aufgabe der vorliegenden Erfindung einen Separator bereitzustellen, der thermisch stabiler als bis jetzt bekannte Polymerseparatoren und chemisch beständiger als Separatoren auf Basis von Metall, Glas oder Keramikgeweben ist.

Überraschenderweise wurde bei der weitergehenden Optimierung der Eigenschaften der in DE 101 42 622 beschriebenen Separatoren nun gefunden, dass Separatoren mit den genannten Eigenschaften realisierbar sind, wenn polymere Substratmaterialien eingesetzt werden. Dadurch erhält man elektrische Separatoren, die ein flächiges, mit einer Vielzahl von Öffnungen versehenes, flexibles Substrat mit einer auf und in diesem Substrat befindlichen Beschichtung umfassen, wobei das Material des Substrates ausgewählt ist aus ungewebten, nicht elektrisch leitfähigen Fasern von Polymeren, und die Beschichtung eine poröse, elektrisch isolierende, keramische Beschichtung ist. Der Separator weist eine Dicke von kleiner 80 µm auf und ist biegbar und zeigt einen in Verbindung mit einem Elektrolyten genügend geringen Widerstand und besitzt zudem eine ausreichend große Langzeitbeständigkeit. Die Temperaturbeständigkeit dieser Separatoren ist gleich der der porösen anorganischen Beschichtung. Die chemische Beständigkeit gegenüber starken Basen erhält man durch Verwendung von stabilen Polymeren wie z. B. Polypropylen/Polyethylen oder Polyacrylnitril-Vlies und beständigen keramischen Materialien wie ZrO₂ und TiO₂.

Gegenstand der vorliegenden Erfindung ist deshalb ein elektrischer Separator gemäß Anspruch 1, umfassend ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus gewebten oder ungewebten, nicht elektrisch leitfähigen Fasern, welcher dadurch gekennzeichnet ist, dass das Substrat als Fasern Polymer-oder Naturfasern und eine Porosität von mehr als 50 % aufweist.

Ebenfalls Gegenstand der vorliegenden Erfindung ist ein Verfahren zur Herstellung eines erfindungsgemäßen Separators, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus ungewebten, nicht elektrisch leitfähigen Fasern von Polymer und die Beschichtung eine poröse, elektrisch isolierende, keramische Beschichtung ist.

Im Allgemeinen kann festgestellt werden, dass je größer die Poren sind um so niedriger der sich einstellende Widerstand ist. Zudem kann durch die Wahl geeigneter Partikel die Porosität des Separators beeinflusst werden, was in gleicher Weise zu geänderten Eigenschaften führt. Eine häufig in diesem Zusammenhang benutzte Kenngröße eines Separators ist die Gurley-Zahl. Sie ist ein Maß für die Gasdurchlässigkeit des trockenen porösen Separators. Wie von O. Besenhard im "Handbook of Battery Materials" beschrieben, kann man direkt aus der Gurley Zahl auf die Leitfähigkeit eines bekannten Systems schließen. Verallgemeinert kann man festhalten, dass eine größere Gasdurchlässigkeit (Gurley-Zahl) eine um so höhere Leitfähigkeit des benetzten Separators in der Batteriezelle bewirkt. Die Werte der Gurley-Zahl kommerziell erhältlicher Separatoren liegen bei 10, wenn der Porendurchmesser um 0,1 µm beträgt, und bei 30, wenn der Porendurchmesser um 0,05µm beträgt. (G. Venugiopal; J. of Power Sources 77 (1999) 34 - 41)

Es ist aber immer zu beachten, dass ein außergewöhnlich kleiner Wert der Gurley-Zahl auch auf Defekte, also große Löcher, im Separator hindeuten kann. Diese Defekte können beim Betrieb einer Batterie zu einem inneren Kurzschluss führen. Die Batterie kann sich dann in einer gefährlichen Reaktion sehr schnell selbst entladen. Hierbei treten dann so große elektrische Ströme auf, dass eine geschlossene Batteriezelle im ungünstigsten Fall sogar explodieren kann. Aus diesem Grund kann der Separator entscheidend zur Sicherheit einer Hochenergie-Batterie beitragen bzw. zur fehlenden Sicherheit beitragen. Daher ist der Separator ein entscheidendes Bauteil in einer Batterie dem man sehr großes Augenmerk widmen muss.

Polymerseparatoren bringen beispielsweise die für Lithium-Batterien zur Zeit geforderte Sicherheit, indem sie ab einer bestimmten Temperatur (der Shut-Down-Temperatur, die bei ca. 120°C liegt) jeglichen Stromtransport durch den Elektrolyten unterbinden. Dies geschieht dadurch, dass bei dieser Temperatur das Porengefüge des Separators zusammenbricht und alle Poren verschlossen werden. Dadurch, dass keine Ionen mehr transportiert werden können, kommt die gefährliche Reaktion, die zur Explosion führen kann, zum erliegen. Wird die Zelle aufgrund äußerer Umstände aber weiter erwärmt, so wird bei ca. 150 bis 180 °C die Break-Down-Temperatur überschritten. Ab dieser Temperatur kommt es zum Schmelzen des Separators, wobei dieser sich zusammenzieht. An vielen Stellen in der Batteriezelle kommt es nun zu einem direkten Kontakt zwischen den beiden Elektroden und somit zu einem großflächigem inneren Kurzschluss. Dieser führt zur unkontrollierten Reaktion die mit einer Explosion der Zelle endet, bzw. der entstehende Druck wird durch ein Überdruckventil (eine Berstscheibe) häufig unter Feuererscheinungen abgebaut.

Bei dem erfindungsgemäßen hybriden, also anorganische Komponenten und polymeres Trägermaterial aufweisenden Separator kommt es zum Shut-Down wenn durch die hohe Temperatur das Polymergefüge des Trägermaterials schmilzt und in die Poren des anorganischen Materials eindringt und diese dadurch verschließt. Zum sogenannten Melt-Down kommt es bei dem erfindungsgemäßen Separator dagegen nicht. Der erfindungsgemäße Separator erfüllt also die Anforderungen nach einer von verschiedenen Batterieherstellern geforderten Sicherheitsabschaltung durch den Shut-Down in den Batteriezellen. Die anorganischen Partikel sorgen dafür, dass es niemals zu einem Melt-Down kommen kann. Somit ist sichergestellt, dass es keine Betriebszustände gibt, in denen ein großflächiger Kurzschluss entstehen kann.

Falls ein Shut down-Mechanismus für die Anwendung zwingend erforderlich ist, so kann dies beispielweise auch dadurch erreicht werden, das die Oberfläche und/oder die Poren des erfindungsgemäßen keramischen bzw. hybriden Separators mit einem Stoff ausgestattet werden, der bei Erreichen der Temperaturgrenze die Poren schließt und den weiteren Ionenfluss verhindert. Dies kann Beispielweise durch ein Polymer oder ein Wachs erreicht werden, dessen Schmelzpunkt in diesem Bereich liegt.

Auch bei einem inneren Kurzschluss, der z. B. durch einen Unfall verursacht wurde, ist der erfindungsgemäße Separator sehr sicher. Würde sich z. B. ein Nagel durch eine Batterie bohren, geschieht je nach Separator folgendes: Der Polymerseparator würde an der Durchdringungsstelle (Ein Kurzschlussstrom fließt über den Nagel und heizt diesen auf) schmelzen und sich zusammenziehen. Dadurch wird die Kurzschlussstelle immer größer und die Reaktion gerät außer Kontrolle. Bei dem erfindungsgemäßen hybriden Separator schmilzt allenfalls das polymere Substratmaterial, nicht aber das anorganische Separatormaterial. Somit läuft die Reaktion im Inneren der Batteriezelle nach einem solchen Unfall sehr viel moderater ab. Diese Batterie ist somit deutlich sicherer als eine mit Polymerseparator. Dies kommt vor allem im mobilen Bereich zum Tragen.

Ein weiterer, nicht unerheblicher Vorteil des erfindungsgemäßen hybriden Separators liegt in der sehr guten Benetzbarkeit. Aufgrund der hydrophilen keramischen Beschichtung erfolgt die Benetzung mit Elektrolyten sehr rasch. Bei weniger hydrophilen Elektrolyten lässt sich die Oberfläche aber auch gezielt hydrophober ausstatten. Damit ist eine schnelle, und damit auch kostengünstige, Herstellung der Batterien gewährleistet.

Außerdem besitzt der erfindungsgemäße Separator einen deutlichen Preisvorteil gegenüber Separatoren auf Basis von Glas- oder Keramikgeweben, wie sie z. B. in DE 101 42 622 beschrieben werden. Dies liegt neben den deutlich unterschiedlichen Materialkosten unter anderem daran, dass das Polymersubstrat wesentlich einfacher zu handhaben ist als Glas- oder Keramikgewebe, welches doch eine gewisse Spröde aufweist und bei unvorsichtiger Handhabung zerstört wird. Der gesamte Herstellungsprozess ist deshalb aufwendiger und damit kostenintensiver.

Der erfindungsgemäße Separator wird im Folgenden beschrieben, ohne dass die Erfindung auf diesen beschränkt sein soll.

Die erfindungsgemäßen elektrischen Separatoren, umfassend ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus gewebten oder ungewebten, nicht elektrisch leitfähigen Fasern, zeichnen sich dadurch aus, dass das Substrat als Fasern Polymer- oder Naturfasern und eine Porosität von mehr als 50 % aufweist. Vorzugsweise weist das Substrat eine Porosität von 50 bis 97 %, besonders bevorzugt von 75 bis 90 % und ganz besonders bevorzugt von 80 bis 90 % auf. Die Porosität ist dabei definiert als das Volumen des Vlieses (100 %) minus dem Volumen der Fasern des Vlieses, also dem Anteil am Volumen des Vlieses, der nicht von Material ausgefüllt wird. Das Volumen des Vlieses kann dabei aus den Abmessungen des Vlieses berechnet werden. Das Volumen der Fasern ergibt sich aus dem gemessen Gewicht des betrachteten Vlieses und der Dichte der Polymerfasern. Die Große Porosität des Substrates ermöglicht auch eine höhere Porosität des erfindungsgemäßen hybriden Separators, weshalb eine höhere Aufnahme an Elektrolyten mit dem erfindungsgemäßen Separator erzielt werden kann.

Die erfindungsgemäßen Separatoren weisen vorzugsweise eine Dicke von kleiner 80 µm, bevorzugt kleiner 75 µm, besonders bevorzugt eine Dicke von 10 bis 75 µm und ganz besonders bevorzugt eine Dicke von 20 bis 50 µm auf. Durch die geringe Dicke wird ein besonders geringer elektrischer Widerstand des Separators in der Anwendung mit einem Elektrolyten erzielt. Der Separator selbst weist natürlich einen sehr hohen elektrischen Widerstand auf, da er selbst isolierende Eigenschaften aufweisen muss.

Damit ein Separator mit isolierenden Eigenschaften erhalten werden kann, weist dieser als Material für das Substrat vorzugsweise nicht elektrisch leitfähige Fasern von Polymeren auf, die vorzugsweise ausgewählt aus Polyacrylnitril (PAN), Polyester, Polyamid (PA), Polyimid (PI), Polytetrafluorethylen (PTFE) und/oder Polyolefin (PO), wie z. B. Polypropylen (PP) oder Polyethylen (PE) oder Mischungen solcher Polyolefine sind. Es sind auch alle anderen in diesen sehr reaktiven Medien stabilen Polymere und auch stabile Naturfasern einsetzbar, die oben genannten sind aber besonders bevorzugte Materialien. In Li Batterien muss der Separator sehr stark reduzierenden Bedingungen und in Ni/MeH oder Ag/Zn-Batterien stark basischen Bedingungen widerstehen.

Die Polymerfasern weisen vorzugsweise einen Durchmesser von 1 bis 25 µm, besonders bevorzugt von 2 bis 15 µm auf.

Das Material des Substrates ist ausgewählt aus gewebten oder ungewebten Polymerfasern. Gewebte Polymerfasern können z. B. Gewebe sein. Ungewebte Polymerfasern können z. B. Gewirke, Vliese oder Filze sein. Besonders bevorzugt ist das Material des flexiblen Substrates ein Vlies aus Polymerfasern bzw. ein Vlies, welches Polymerfasern aufweist. Durch Verwendung eines Vlieses, vorzugsweise eines sehr dünnen und homogenen Vliesmaterials, wird ein gleichmäßiger Widerstand in der Anwendung mit einem Elektrolyten erzielt. Vliese haben den Vorteil, dass sie eine deutlich höhere Porosität aufweisen als vergleichbare Gewebe.

Das Substrat, insbesondere das Vlies weist bevorzugt eine Dicke von 15 bis 80 µm, vorzugsweise von 25 bis 50 µm und ganz besonders bevorzugt von 15 bis 40 µm auf Die Dicke des Substrates hat einen großen Einfluss auf die Eigenschaften des Separators, da zum einen die Flexibilität aber auch der Flächenwiderstand des mit Elektrolyt getränkten Separators von der Dicke des Substrates abhängig ist. Zudem erlauben dünnere Separatoren eine erhöhte Packungsdichte in einem Batteriestapel, so dass man im gleichen Volumen eine größere Energiemenge speichern kann. Ferner kann dadurch auch die Grenzstromdichte, durch Vergrößerung der Elektrodenfläche, erhöht werden.

Der erfindungsgemäße Separator weist eine poröse, elektrisch isolierende, keramische Beschichtung auf. Es kann vorteilhaft sein, wenn die auf und in dem Substrat befindliche Beschichtung ein nicht elektrisch leitendes Oxid der Metalle Al, Zr, Si, Sn, Ti und/oder Y, aufweist. Vorzugsweise weist der Separator eine Porosität von 10 % bis 70 % , bevorzugt von 20 % bis 60 % und besonders bevorzugt von 30 % bis 50 % auf. Die Porosität bezieht sich dabei auf die erreichbaren, also offenen Poren. Die Porosität kann dabei mittels der bekannten Methode der Quecksilber-Porosimetrie bestimmt werden oder kann aus dem Volumen und der Dichte der verwendeten Einsatzstoffe errechnet werden, wenn davon ausgegangen wird, dass nur offene Poren vorliegen. Die auf und in dem Substrat befindliche Beschichtung weist besonders bevorzugt ein Oxid der Metalle Al, Zr und/oder Si auf.

Die erfindungsgemäßen Separatoren zeichnen sich dadurch aus, dass sie eine Reißfestigkeit von mindestens 1 N/cm, vorzugsweise von mindestens 3 N/cm und ganz besonders bevorzugt von größer 6 N/cm aufweisen können. Die erfindungsgemäßen Separatoren lassen sich vorzugsweise ohne Beschädigung bis auf jeden Radius bis herab zu 100 m, vorzugsweise bis herab zu 50 mm und ganz besonders bevorzugt bis herab zu 2 mm biegen. Die hohe Reißfestigkeit und die gute Biegbarkeit des erfindungsgemäßen Separators hat den Vorteil, dass beim Laden und Entladen einer Batterie auftretende Veränderungen der Geometrien der Elektroden durch den Separator mitgemacht werden können, ohne dass dieser beschädigt wird. Die Biegbarkeit hat zudem den Vorteil, dass mit diesem Separator kommerziell standardisierte Wickelzellen produziert werden können. Bei diesen Zellen werden die Elektroden/Separator-Lagen in standardisierter Größe miteinander spiralförmig aufgewickelt und kontaktiert.

Der erfindungsgemäße Separator ist vorzugsweise erhältlich durch ein Verfahren zur Herstellung eines Separators, welches dadurch gekennzeichnet ist, dass ein flächiges, mit einer Vielzahl von Öffnungen versehenes, flexibles Substrat in und auf diesem Substrat mit einer Beschichtung versehen wird, wobei das Material des Substrates ausgewählt ist aus gewebten oder ungewebten, nicht elektrisch leitfähigen Fasern von Polymeren und die Beschichtung eine poröse, elektrisch isolierende, keramische Beschichtung ist.

Die Beschichtung wird auf das Substrat vorzugsweise durch Aufbringen einer Suspension, die zumindest, ein nicht oder nur sehr schlecht elektrisch leitendes Oxid der Metalle Al, Zr, Si, Sn, Ti und/oder Y und ein Sol aufweist, auf das Substrat und durch zumindest einmaliges Erwärmen, bei welchem die Suspension auf oder im oder aber auf und im Träger verfestigt wird, aufgebracht. Das Verfahren selbst ist aus WO 99/15262 bekannt, jedoch lassen sich nicht alle Parameter bzw. Einsatzstoffe, insbesondere nicht elektrisch leitfähige Einsatzstoffe, für die Herstellung des erfindungsgemäßen Separators einsetzen. Aufgrund der Auswahl der Einsatzstoffe ergeben sich auch bestimmte Verfahrensparameter, die für die als Separator geeigneten Materialkombinationen erst gefunden werden mussten.

Die Suspension kann z. B. durch Aufdrucken, Aufpressen, Einpressen Aufrollen, Aufrakeln, Aufstreichen, Tauchen, Spritzen oder Aufgießen auf und in das Substrat gebracht werden.

Das Material des Substrates ist vorzugsweise ausgewählt aus Vliesen von Polymerfasern mit einer Dicke von 10 bis 200 µm. Es kann besonders vorteilhaft sein, wenn die erfindungsgemäße Membran ein Substrat aufweist, welches eine Dicke von 30 bis 100 µm, bevorzugt von 25 bis 50 µm aufweist.

Die Polymerfasern sind bevorzugt ausgewählt aus Polyacrylnitril, Polyamiden, Polyimiden, Polyacrylaten, Polytetrafluorethylen, Polyester, wie z. B. Polyethylenterephthalat und/oder Polyolefinen. Aber auch alle anderen bekannten Polymerfasern und viele Naturfasern sind einsetzbar. Bevorzugt weist die erfindungsgemäße Membran Polymerfasern auf, die eine Erweichungstemperatur von größer 100 °C und eine Schmelztemperatur von größer 110 °C aufweisen. Bei Polymerfasern mit niedrigeren Temperaturgrenzen verkleinern sich auch die Anwendungsgebiete. Bevorzugte Membranen sind bis zu einer Temperatur von bis zu 150 °C, vorzugsweise bis zu einer Temperatur von 120 bis 150 °C und ganz besonders bevorzugt bis zu einer Temperatur von 121 °C einsetzbar. Es kann vorteilhaft sein, wenn die Polymerfasern einen Durchmesser von 1 bis 25 µm, vorzugsweise von 2 bis 15 µm aufweisen. Sind die Polymerfasern deutlich dicker als die genannten Bereiche, leidet die Flexibilität des Substrates und damit auch die des Separators.

Die zur Herstellung der Beschichtung verwendete Suspension weist zumindest ein anorganisches Oxid des Aluminiums, Siliziums und/oder Zirkoniums und zumindest ein Sol, zumindest ein Halbmetalloxidsol oder zumindest ein Mischmetalloxidsol oder eine Mischung dieser Sole auf, und wird durch Suspendieren zumindest einer anorganischen Komponente in zumindest einem dieser Sole hergestellt.

Die Sole werden durch Hydrolisieren zumindest einer Verbindung, vorzugsweise zumindest einer Metallverbindung, zumindest einer Halbmetallverbindung oder zumindest einer Mischmetallverbindung erhalten. Ebenso kann es vorteilhaft sein, die zu hydrolysierende Verbindung vor der Hydrolyse in Alkohol oder eine Säure oder eine Kombination dieser Flüssigkeiten zu geben. Als zu hydrolysierende Verbindung wird vorzugsweise zumindest ein Metallnitrat, ein Metallchlorid, ein Metallcarbonat, eine Metallalkoholatverbindung oder zumindest eine Halbmetallalkoholatverbindung, besonders bevorzugt zumindest eine Metallalkoholatverbindung hydrolisiert. Als Metallalkoholatverbindung oder Halbmetallalkoholatverbindung wird vorzugsweise eine Alkoholatverbindung der Elemente Zr, Al, Si, Ti und Y oder zumindest ein Metallnitrat, Metallcarbonat oder Metallhalogenid ausgewählt aus den Metallsalzen der Elemente Zr, Al, Si und Ti als Metallverbindung hydrolisiert. Die Hydrolyse erfolgt vorzugsweise in Gegenwart von Wasser, Wasserdampf, Eis, oder einer Säure oder eine Kombination dieser Verbindungen.

In einer Ausführungsvariante des erfindungsgemäßen Verfahrens werden durch Hydrolyse der zu hydrolisierenden Verbindungen partikuläre Sole hergestellt. Diese partikulären Sole zeichnen sich dadurch aus, dass das die in dem Sol durch Hydrolyse entstandenen Verbindungen partikulär vorliegen. Die partikulären Sole können wie oben oder wie in WO 99/15262 beschrieben hergestellt werden. Diese Sole weisen üblicherweise einen sehr hohen Wassergehalt auf, der bevorzugt größer als 50 Gew.-% ist. Es kann vorteilhaft sein, die zu hydrolysierende Verbindung vor der Hydrolyse in Alkohol oder eine Säure oder eine Kombination dieser Flüssigkeiten zu geben. Die hydrolisierte Verbindung kann zum Peptisieren mit zumindest einer organischen oder anorganischen Säure, vorzugsweise mit einer 10 bis 60%igen organischen oder anorganischen Säure, besonders bevorzugt mit einer Mineralsäure, ausgewählt aus Schwefelsäure, Salzsäure, Perchlorsäure, Phosphorsäure und Salpetersäure oder einer Mischung dieser Säuren behandelt werden. Die so hergestellten partikulären Sole können anschließend zur Herstellung von Suspensionen eingesetzt werden, wobei die Herstellung von Suspensionen zum Aufbringen auf Naturfaservliesen bzw. mit polymeren Sol vorbehandelten Polymerfaservliesen bevorzugt ist.

In einer weiteren Ausführungsvariante des erfindungsgemäßen Verfahrens werden durch Hydrolyse der zu hydrolisierenden Verbindungen polymere Sole hergestellt. Diese polymeren Sole zeichnen sich dadurch aus, dass die in dem Sol durch Hydrolyse entstandenen Verbindungen polymer (also kettenförmig über einen größeren Raum vernetzt) vorliegen. Die polymeren Sole weisen üblicherweise weniger als 50 Gew.-%, vorzugsweise sehr viel weniger als 20 Gew.-% an Wasser und/oder wässriger Säure auf. Um auf den bevorzugten Anteil von Wasser und/oder wässriger Säure zu kommen wird die Hydrolyse vorzugsweise so durchgeführt, dass die zu hydrolisierende Verbindung mit dem 0,5 bis 10-fachen Molverhältnis und bevorzugt mit dem halben Molverhältnis Wasser, Wasserdampf oder Eis, bezogen auf die hydrolisierbare Gruppe, der hydrolisierbaren Verbindung, hydrolisiert wird. Eine bis zu 10-fache Menge an Wasser kann bei sehr langsam hydrolisierenden Verbindungen wie z. B. beim Tetraethoxysilan eingesetzt werden. Sehr schnell hydrolisierende Verbindungen wie das Zirkontetraethylat können unter diesen Bedingungen durchaus schon partikuläre Sole bilden, weshalb zur Hydrolyse solcher Verbindungen bevorzugt die 0,5-fache Menge an Wasser eingesetzt wird. Eine Hydrolyse mit weniger als der bevorzugten Menge an Wasser, Wasserdampf, oder Eis führt ebenfalls zu guten Ergebnissen. Wobei ein Unterschreiten der bevorzugten Menge von einem halben Molverhältnis um mehr als 50 % möglich aber nicht sehr sinnvoll ist, da beim Unterschreiten dieses Wertes die Hydrolyse nicht mehr vollständig ist und Beschichtungen auf Basis solcher Sole nicht sehr stabil sind.

Zur Herstellung dieser Sole mit dem gewünschten sehr geringen Anteil an Wasser und/oder Säure im Sol kann es vorteilhaft sein, wenn die zu hydrolisierende Verbindung in einem organischen Lösemittel, insbesondere Ethanol, Isopropanol, Butanol, Amylalkohol, Hexan, Cyclohexan, Ethylacetat und/oder Mischungen dieser Verbindungen, gelöst wird bevor die eigentliche Hydrolyse vorgenommen wird. Ein so hergestelltes Sol kann zur Herstellung der erfindungsgemäßen Suspension oder als Haftvermittler in einem Vorbehandlungsschritt eingesetzt werden.

Sowohl die partikulären Sole als auch die polymeren Sole können als Sol in dem erfindungsgemäßen Verfahren zur Herstellung der Suspension eingesetzt werden. Neben den Solen, die wie gerade beschrieben erhältlich sind, können prinzipiell auch handelsübliche Sole, wie z. B. Zirkonnitratsol oder Silicasol eingesetzt werden. Das Verfahren der Herstellung von Separatoren durch Aufbringen und Verfestigen einer Suspension auf einen Träger an und für sich ist aus DE 101 42 622 und in ähnlicher Form aus WO 99/15262 bekannt, jedoch lassen sich nicht alle Parameter bzw. Einsatzstoffe, auf die Herstellung der erfindungsgemäßen Membran übertragen. Der Prozess, der in WO 99/15262 beschrieben wird, ist in dieser Form insbesondere nicht ohne Abstriche auf polymere Vliesmaterialien übertragbar, da die dort beschriebenen sehr wasserhaltigen Solsysteme, häufig keine durchgängige Benetzung der üblicherweise hydrophoben Polymervliese in der Tiefe ermöglichen, da die sehr wasserhaltigen Solsysteme die meisten Polymervliese nicht oder nur schlecht benetzen. Es wurde festgestellt, dass selbst kleinste unbenetzte Stellen im Vliesmaterial dazu führen können, dass Membranen bzw. Separatoren erhalten werden, die Fehler aufweisen und damit unbrauchbar sind.

Es wurde nun überraschenderweise gefunden, dass ein Solsystem bzw. eine Suspension, welches bzw. welche im Benetzungsverhalten den Polymeren angepasst wurde, die Vliesmaterialien vollständig durchtränkt und somit fehlerfreie Beschichtungen erhältlich sind. Bevorzugt erfolgt bei dem erfindungsgemäßen Verfahren deshalb eine Anpassung des Benetzungsverhaltens des Sols bzw. der Suspension. Diese Anpassung erfolgt vorzugsweise durch die Herstellung von polymeren Solen bzw. Suspensionen aus polymeren Solen wobei diese Sole einen oder mehrere Alkohole, wie z. B. Methanol, Ethanol oder Propanol oder Mischungen, die einen oder mehrere Alkohole sowie, vorzugsweise aliphatische Kohlenwasserstoffe aufweisen, umfassen. Es sind aber auch andere Lösemittelgemische denkbar, die dem Sol bzw. der Suspension zugegeben werden können, um diese im Benetzungsverhalten an das verwendete Substrat anzupassen.

Es wurde festgestellt, dass die grundlegende Änderung des Solsystems und der daraus resultierenden Suspension zu einer deutlichen Verbesserung der Haftungseigenschaften der keramischen Komponenten auf dem und in einem polymeren Vliesmaterial führt. Solche guten Haftfestigkeiten sind mit partikulären Solsystemen normalerweise nicht erhältlich. Vorzugsweise werden deshalb Substrate, die Polymerfasern aufweisen, mittels Suspensionen beschichtet, die auf polymeren Solen basieren oder in einem vorgeschalteten Schritt durch Behandlung mit einem polymeren Sol mit einem Haftvermittler ausgerüstet wurden.

Es kann vorteilhaft sein, wenn zur Herstellung der Suspension als anorganische Komponente, zumindest ein Oxid, ausgewählt aus den Oxiden der Elemente Y, Zr, Al, Si, Sn, und Ti, in einem Sol suspendiert wird. Vorzugsweise wird eine anorganische Komponente, die zumindest eine Verbindung, ausgewählt aus Aluminiumoxid, Titandioxid, Zirkonoxid und/oder Siliziumdioxid, suspendiert. Vorzugsweise beträgt der Massenanteil der suspendierten Komponente das 0,1 bis 500-fache, besonders bevorzugt das 1 bis 50-fache und ganz besonders bevorzugt das 5 bis 25-fache des eingesetzten Sols.

Es kann vorteilhaft sein, wenn zumindest eine anorganische Komponente, welche eine mittlere Korngröße von 1 bis 10000 nm, vorzugsweise von 1 bis 10 nm, 10 bis 100 nm, 100 bis 1000 nm oder 1000 bis 10000 nm, besonders bevorzugt von 250 bis 1750 nm und ganz besonders bevorzugt von 300 bis 1250 nm aufweist, in zumindest einem Sol suspendiert wird. Durch die Verwendung von anorganischen Komponenten, die eine mittlere Korngröße von 250 bis 1250 nm aufweisen, wird eine besonders gut geeignete Biegsamkeit und Porosität der Membran erreicht.

Zur Verbesserung der Haftung der anorganischen Komponenten an Polymerfasern als Substrat kann es vorteilhaft sein, den eingesetzten Suspensionen Haftvermittler, wie z. B. organofunktionelle Silane oder auch reine Oxide wie ZrO₂, TiO₂, SiO₂ oder Al₂O₃ beizufügen. Das Beifügen von Haftvermittlern ist dabei bei Suspensionen auf Basis polymerer Sole bevorzugt. Als Haftvermittler sind insbesondere Verbindungen, ausgewählt aus den Octylsilanen, den fluorierten Octylsilanen, den Vinylsilanen, den aminfunktionalisierten Silanen und/oder den Glycidylfunktionalisierten Silanen, wie z. B. die Dynasilane der Fa. Degussa einsetzbar. Besonders bevorzugte Haftvermittler für Polytetrafluorethylen (PTFE) sind z. B. Fluorierte Octylsilane, für Polyethylen (PE) und Polypropylen (PP) sind es Vinyl-, Methyl- und Octylsilane, wobei eine ausschließliche Verwendung von Methylsilanen nicht optimal ist, für Polyamide und Polyamine sind es Aminfunktionelle Silane, für Polyacrylate und Polyester sind es Glycidylfunktionalisierte Silane und für Polyacrylnitril kann man auch Glycidylfunktionalisierte Silane einsetzen. Auch andere Haftvermittler sind einsetzbar, die aber auf die jeweiligen Polymere abgestimmt sein müssen. Der in WO 99/15262 beschriebene Zusatz von Methyltriethoxysilan zum Solsystem bei der Beschichtung von polymeren Trägermaterialien ist eine vergleichsweise schlechte Lösung des Problems der Haftfestigkeit von Keramik auf Polymerfasern. Zudem ist die Trocknungsdauer von 30 bis 120 Min. bei 60 bis 100 °C bei den beschriebenen Solsystemen nicht ausreichend um hydrolysebeständige keramische Materialien zu erhalten. Das heißt diese Materialien werden sich bei längerer Lagerung in wasserhaltigen Medien auflösen bzw. sie werden beschädigt werden. Andererseits würde die in WO 99/15262 beschriebene Temperaturbehandlung von über 350 °C zu einem Verbrennen des hier verwendeten Polymervlieses und damit zur Zerstörung der Membran führen. Die Haftvermittler müssen also so ausgewählt werden, dass die Verfestigungstemperatur unterhalb des Schmelz- oder Erweichungspunktes des Polymeren und unterhalb dessen Zersetzungstemperatur liegt. Bevorzugt weisen erfindungsgemäße Suspensionen sehr viel weniger als 25 Gew.-%, vorzugsweise weniger als 10 Gew.-% Verbindungen auf, die als Haftvermittler fungieren können. Ein optimaler Anteil an Haftvermittler ergibt sich aus der Beschichtung der Fasern und/oder Partikel mit einer monomolekularen Lage des Haftvermittlers. Die hierzu benötigte Menge an Haftvermittler in Gramm kann durch Multiplizieren der Menge der eingesetzten Oxide, beziehungsweise der Fasern (in g) mit der spezifischen Oberfläche der Materialien (in m²g⁻¹) und anschließendes Dividieren durch den spezifischen Platzbedarf der Haftvermittler (in m² g⁻¹) erhalten werden, wobei der spezifische Platzbedarf häufig in der Größenordnung von 300 bis 400 m² g⁻¹ liegt.

Die folgende Tabelle enthält einen beispielhaften Überblick über einsetzbare Haftvermittler auf Basis von organofunktionellen Si-Verbindungen für typische als Vliesmaterial verwendete Polymere.

| Polymer | Organofunktionstyp | Haftvermittler |
|---|---|---|
| PAN | Glycidyl | GLYMO |
| | Methacryl | MEMO |
| PA | Amino | AMEO, DAMO |
| PET | Methacryl | MEMO |
| | Vinyl | VTMO, VTEO, VTMOEO |
| PE, PP | Amino | AMEO, AMMO |
| | Vinyl | VTMO, VTEO, Silfin |
| | Methacryl | MEMO |

Mit:
AMEO = 3-Aminopropyltriethoxysilan
DAMO = 2-Aminoethyl-3-aminopropyltrimethoxysilan
GLYMO = 3-Glycidyloxytrimethoxysilan
MEMO = 3-methacryloxypropyltrimethoxysilan
Silfin = Vinylsilan + Initiator + Katalysator
VTEO = Vinyltriethoxysilan
VTMO = Vinyltrimethoxysilan
VTMOEO = Vinyltris(2-methoxyethoxy)silan

Die erfindungsgemäßen Beschichtungen werden durch Verfestigen der Suspension in und auf dem Substrat auf das Substrat aufgebracht. Erfindungsgemäß kann die auf und im Substrat vorhandene Suspension durch Erwärmen auf 50 bis 350 °C verfestigt werden. Da bei der Verwendung polymerer Substratmaterialien die maximal Temperatur durch das Substrat vorgegeben wird, ist diese entsprechend anzupassen. So wird je nach Ausführungsvariante des erfindungsgemäßen Verfahrens die auf und im Substrat vorhandene Suspension durch Erwärmen auf 100 bis 350 °C und ganz besonders bevorzugt durch Erwärmen auf 110 bis 280 °C verfestigt. Es kann vorteilhaft sein, wenn das Erwärmen für 1 Sekunde bis 60 Minuten bei einer Temperatur von 100 bis 350 °C erfolgt. Besonders bevorzugt erfolgt das Erwärmen der Suspension zum Verfestigen auf eine Temperatur von 110 bis 300 °C, ganz besonders bevorzugt bei einer Temperatur von 110 bis 280 °C und vorzugsweise für 0,5 bis 10 Min.

Bei der Verfestigung des Separators kann es je nach gewählter Temperaturhöhe bei einigen Polymermaterialien unter dem Temperatureinfluss zu Veränderungen in der chemischen Struktur kommen, so dass anschließend die Polymere nicht mehr in ihrem Ausgangszustand bzw. -modifikation vorliegen. So kann es zu einer teilweisen Karbonisierung von Polyimiden oder zur Bildung sogenannter Leiterpolymere bei Polyacrylnitril mit nachfolgender teilweiser Karbonisierung kommen. Diese Effekte führen immer zu einer Veränderung der Eigenschaften der Trägerwerkstoffe. Dies kann je nach Anwendung auch speziell beabsichtigt werden, da dadurch beispielsweise die Lösesmittel-, Säure- und Laugebeständigkeit erhöht werden kann. Der Grad der Umwandlung kann dabei über Temperatur und Zeit beeinflusst werden.

Das erfindungsgemäße Erwärmen des Verbundes kann mittels erwärmter Luft, Heißluft, Infrarotstrahlung oder durch andere Erwärmungsmethoden nach dem Stand der Technik erfolgen.

In einer besonderen Ausführungsform des erfindungsgemäßen Verfahrens werden die oben genannten Haftvermittler in einem vorgeschalteten Schritt auf das Substrat, insbesondere das Polymervlies aufgebracht. Hierzu werden die Haftvermittler in einem geeigneten Lösemittel, wie z. B. Ethanol gelöst. Diese Lösung kann auch noch eine geringe Menge an Wasser, vorzugsweise die 0,5 bis 10-fache Menge bezogen auf die molare Menge der hydrolysierbaren Gruppe, und kleine Mengen einer Säure, wie z. B. HCl oder HNO₃, als Katalysator für die Hydrolyse und Kondensation der Si-OR-Gruppen enthalten. Durch die bekannten Techniken, wie z. B. Aufsprühen, Aufdrucken, Aufpressen, Einpressen Aufrollen, Aufrakeln, Aufstreichen, Tauchen, Spritzen oder Aufgießen wird diese Lösung auf das Substrat aufgebracht und der Haftvermittler durch eine Temperaturbehandlung bei 50 bis maximal 350 °C auf dem Substrat fixiert. Erst nach dem Aufbringen des Haftvermittlers erfolgt bei dieser Ausführungsvariante des erfindungsgemäßen Verfahrens das Aufbringen und Verfestigen der Suspension.

In einer anderen Ausführungsvariante des erfindungsgemäßen Verfahrens werden haftvermittelnde Schichten in einem Vorbehandlungsschritt, bei dem ein polymeres Sol, aufgebracht und verfestigt wird, aufgebracht. Das Aufbringen und Verfestigen des polymeren Sols erfolgt vorzugsweise auf dieselbe Weise wie das Aufbringen und Verfestigen der Suspensionen. Durch das Aufbringen dieser polymeren Sole werden die Substrate, insbesondere die Polymervliese mit einem Oxid von Al, Ti, Zr oder Si als Haftvermittler ausgerüstet, wodurch das Substrat hydrophil ausgestattet wird. So ausgerüstete Substrate können dann nach dem in WO 99/15262 beschriebenen Stand der Technik bzw. wie oben beschrieben mit einer porösen Beschichtung ausgerüstet werden, wobei durch die Vorbehandlung eine deutlich bessere Haftung der Beschichtung, insbesondere auf Polymervliesen beobachtet werden kann.

Ein typisches polymeres Sol für eine Vorbehandlung stellt etwa eine 2 bis 10 Gew.-% alkoholische Lösung eines Metallalkoholats (wie z. B. Titanethylat oder Zirkoniumpropylat) dar, das noch zusätzlich 0,5 bis 10 mol-Anteile Wasser sowie geringe Mengen einer Säure als Katalysator enthalten kann. Nach Aufbringen eines solchen Sols auf das Substrat werden die Substrate, vorzugsweise Polymervliese bei einer Temperatur von maximal 350 °C behandelt. Dabei entsteht ein dichter Film aus einem Metalloxid um die Substratfasern herum, wodurch eine Infiltration des Substrates mit einer Suspension bzw. einem Schlicker auf Basis eines kommerziellen Zirkonnitratsols oder Silicasols ohne Benetzungsschwierigkeiten möglich ist.

Da polymere Sole eher dichte Filme bilden als partikuläre und die partikulären Sole zudem immer größere Mengen an Wasser im Porengefüge der Zwischenkornvolumina besitzen, ist es einfacher polymere Sole zu trocknen als partikulärer Sole. Trotzdem müssen die Membranen bei Temperaturen von über 150 °C getrocknet werden, damit das keramische Material eine genügend gute Haftfestigkeit auf dem Substrat erhält. Besonders gute Haftfestigkeiten lassen sich bei einer Temperatur von mindesten 200 °C und ganz besonders gute Festigkeiten bei einer Temperatur von mindestens 250 °C erzielen. Allerdings sind hierfür dann entsprechend temperaturstabile Polymere zwingend erforderlich, wie etwa Polyethylenterephthalat (PET), Polyacrylnitril (PAN), Polytetrafluorethylen (PTFE), Polyvinylidenfluorid (PVDF) oder Polyamid (PA). Ist das Substrat nicht genügend temperaturstabil, so kann durch eine Vortrocknung bei geringeren Temperatur (bis 100 °C) zunächst eine Vorverfestigung der Membran erfolgen. Bei der Nachverfestigung bei erhöhter Temperatur wirkt dann die Keramikschicht als Stütze für den Support, so dass es nicht mehr zu einem Wegschmelzen des Substrates kommen kann. Diese Verfahrensparameter gelten nicht nur für das Aufbringen und Verfestigen eines polymeren Sols z. B. als Haftvermittler sondern auch für das Aufbringen und Verfestigen von Suspensionen auf Basis von polymeren Solen.

Durch beide Ausführungsarten des Aufbringens eines Haftvermittlers vor dem eigentlichen Aufbringen der Suspension kann das Haftverhalten der Substrate insbesondere gegenüber wässrigen, partikulären Solen verbessert werden, weshalb insbesondere so vorbehandelte Substrate mit Suspensionen auf Basis von handelsüblichen Solen, wie z. B. Zirkonnitratsol oder Silicasol erfindungsgemäß beschichtet werden können. Diese Vorgehensweise des Aufbringens eines Haftvermittlers bedeutet aber auch, dass das Herstellverfahren der erfindungsgemäßen Membran um einen Zwischen- bzw. Vorbehandlungsschritt erweitert werden muss. Dies ist machbar allerdings auch aufwendiger als die Verwendung von angepassten Solen denen Haftvermittler beigegeben wurden, hat aber auch den Vorteil, dass auch beim Einsatz von Suspensionen auf Basis von handelsüblichen Solen bessere Ergebnisse erzielt werden.

Das erfindungsgemäße Verfahren kann z. B. so durchgeführt werden, dass das Substrat von einer Rolle abgerollt wird, mit einer Geschwindigkeit von 1 m/h bis 2 m/s, vorzugsweise mit einer Geschwindigkeit von 0,5 m/min. bis 20 m/min und ganz besonders bevorzugt mit einer Geschwindigkeit von 1 m/min bis 5 m/min durch zumindest eine Apparatur, welche die Suspension auf und in den Support bringt, wie z. B. eine Walze, und zumindest eine weitere Apparatur, welche das Verfestigen der Suspension auf und in dem Support durch Erwärmen ermöglicht, wie z. B. ein elektrisch beheizter Ofen durchläuft und der so hergestellte Separator auf einer zweiten Rolle aufgerollt wird. Auf diese Weise ist es möglich, den erfindungsgemäßen Separator im Durchlaufverfahren herzustellen. Auch die Vorbehandlungsschritte können im Durchlaufverfahren unter Beibehaltung der genannten Parameter durchgeführt werden.

Erfindungsgemäße hybride Separatoren können als Separatoren in Batterien verwendet werden. Bei der erfindungsgemäßen Verwendung des Separators als Separator in Batterien wird der Separator üblicherweise mit dem Elektrolyten getränkt zwischen der Anode und der Kathode platziert.

Der erfindungsgemäße Separator ist für primäre und sekundäre (wiederaufladbare) Lithium-Batterien, für Nickelmetallhydrid-, Nickel-Cadmium-, Silber-Zink und Zink-Luft-Batterien geeignet. Unter anderem ist der erfindungsgemäße Separator geeignet als Separator in Batterien, die das System Li/LiAlCl₄ x SO₂/LiCoO₂ verwenden, eingesetzt zu werden. Aber auch in allen anderen hier nicht genannten Batteriesystemen ist der erfindungsgemäße Separator einsetzbar. Besonders geeignet ist der erfindungsgemäße Separator für einen Einsatz in Batteriesystemen, mit höheren erlaubten Betriebstemperaturen.

Ebenso gut geeignet sind die erfindungsgemäßen Separatoren für den Einsatz in Batterien die schnell aufgeladen werden sollen. Durch die hohe Temperaturbeständigkeit des erfindungsgemäßen Separators ist eine Batterie, die mit diesem Separator ausgerüstet ist, nicht so temperaturempfindlich und kann daher den Temperaturanstieg Aufgrund der schnellen Ladung ohne negative Veränderungen des Separators bzw. ohne Beschädigung der Batterie dulden. Folglich sind diese Batterien deutlich schneller aufzuladen. Dies ist ein deutlicher Vorteil beim Einsatz solcher Art ausgerüsteter Batterien in Elektrofahrzeugen, da diese nicht mehr über 12 Stunden oder noch längere Zeiträume geladen werden müssen, sondern das Aufladen innerhalb von deutlich kürzeren Zeiträumen durchführbar ist.

Durch Anpassung der Ausgangsmaterialien oder durch Nachbehandlung der keramischen Schicht kann verschiedenen chemischen und technischen Ansprüchen Rechnung getragen werden.

So kann beispielsweise durch Nachbehandlung oder durch Umsetzung mit entsprechenden chemischen Gruppen, die dem Fachmann bekannt sind, eine hydrophile oder hydrophobe Beschichtung erzeugt werden. Dies kann beispielsweise mit Organotrialkoxyverbindungen des Siliziums erfolgen. Diese können entweder zusammen mit dem Aufbringen des keramischen Materials auf das Substrat oder aber auch im Anschluss an die Herstellung des Separators aufgebracht werden.

Durch Wahl besonders alkalibeständiger Einsatzmaterialien kann der Separator für Systeme mit stark basischen Elektrolyten optimiert werden. Hier setzt man dann Zirkonoxid bzw. Titandioxid anstelle von Aluminiumoxid oder Siliziumdioxid als anorganische Komponente ein. Der Vliesstoff sollte dann auch aus einem Polyolefin oder aus Polyacrylnitril und nicht aus Polyester bestehen.

Gegenstand der Erfindung sind deshalb auch Lithiumbatterien, Nickelmetallhydridbatterien, Nickel-Cadmium-Batterien, Silber-Zink-Batterien und Zink-Luft-Batterien, die einen erfindungsgemäßen Separator aufweisen.

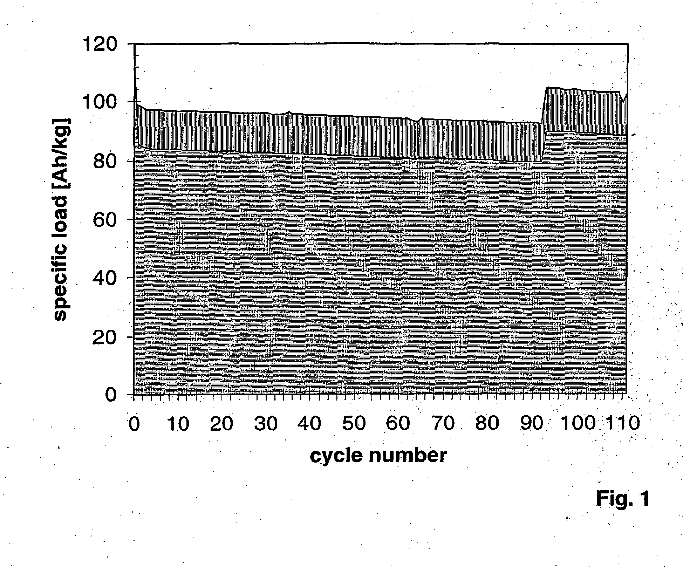

Fig. 1 gibt graphisch das Ladeverhalten einer Li-Ionen-Zelle gemäß Beispiel 13 wieder. Auf der X-Achse ist die Anzahl der Ladezyklen (cycle number) angegeben. Auf der Y-Achse ist die spezifische Kapazität (specific load) in Ah/kg aufgetragen. Die obere der beiden Kurven gibt die Gesamtkapazität wieder, die darunter liegende Kurve die Ladungskapazität bei konstantem Strom I. Bei 92 Ladezyklen wurde die Ladespannung von 4,1 auf 4,2 Volt erhöht. Daraus resultiert eine erhöhte Gesamtkapazität sowie eine erhöhte Ladungskapazität bei einem konstanten Strom I.

Die vorliegende Erfindung wird durch die nachfolgenden Beispiele beschrieben, ohne darauf beschränkt zu sein.

### Beispiel 1: Herstellung eines S450PET-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO (Hersteller aller Dynasilane: Degussa AG) gegeben. In diesem Sol, das zunächst für einige Stunden gerührt wurde, werden dann jeweils 125 g der Aluminiumoxide Martoxid MZS-1 und Martoxid MZS-3 (Hersteller beider Aluminiumoxide: Martinswerke) suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m² wird in einem kontinuierlichen Aufwalzverfahren (Bandgeschwindigkeit ca. 8 m/h, T = 200 °C) mit obigem Schlicker beschichtet. Bei diesem Aufwalzverfahren wird der Schlicker mit einer Walze, die sich gegenläufig zur Bandrichtung (Bewegungsrichtung des Vlieses) bewegt auf das Vlies aufgewalzt. Das Vlies läuft anschließend durch einen Ofen, der die angegebene Temperatur aufweist. In den nachfolgenden Versuchen wird die gleiche Methode bzw. Anordnung verwendet. Man erhält am Ende einen Separator mit einer mittleren Porenweite von 450 nm.

### Beispiel 2: Herstellung eines S240PAN-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann 280 g des Aluminiumoxids Alcoa CT 1200 SG suspendiert.

Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PAN-Vlies (Viledon 1773, Firma Freudenberg) mit einer Dicke von etwa 100 µm und einem Flächengewicht von 22 g/m² wird in einem kontinuierlichen Aufwalzverfahren (Bandgeschwindigkeit ca. 8 m/h, T = 250 °C) mit obigem Schlicker beschichtet. Man erhält am Ende einen Separator mit einer mittleren Porenweite von 240 nm.

### Beispiel 3: Herstellung eines S450PO-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden gerührt wurde, werden dann jeweils 125 g der Aluminiumoxide Martoxid MZS-1 und Martoxid MZS-3 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PO-Vlies (FS 2202-03, Firma Freudenberg) mit einer Dicke von etwa 30 µm wird in einem kontinuierlichen Aufwalzverfahren (Bandgeschwindigkeit ca. 8 m/h, T = 110 °C) mit obigem Schlicker beschichtet. Man erhält am Ende einen Separator mit einer mittleren Porenweite von 450 nm.

### Beispiel 4: Herstellung eines S100PET-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden weiter gerührt wurde, werden dann 280 g des Aluminiumoxids AlCoA CT3000 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m2 wird in einem kontinuierlichen Aufwalzverfahren (Bandgeschwindigkeit ca. 8 m/h, T = 200 °C) mit obigem Schlicker beschichtet. Man erhält am Ende einen Separator mit einer mittleren Porenweite von 100 nm.

### Beispiel 5: Herstellung eines S100PAN-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan GLYMO gegeben. In diesem Sol, das zunächst für einige Stunden weiter gerührt wurde, werden dann 300 g des Aluminiumoxids AlCoA CT3000 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PAN-Vlies (Viledon 1773, Firma Freudenberg) mit einer Dicke von etwa 100 µm und einem Flächengewicht von 22 g/m² wird in einem kontinuierlichen Aufwalzverfahren (Bandgeschwindigkeit ca. 8 m/h, T = 250 °C) mit obigem Schlicker beschichtet. Man erhält am Ende einen Separator mit einer mittleren Porenweite von 100 nm.

### Beispiel 6: Herstellung eines S450PAN-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan MEMO gegeben. In diesem Sol, das zunächst für einige Stunden gerührt wurde, werden dann jeweils 140 g der Aluminiumoxide Martoxid MZS-1 und Martoxid MZS-3 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PAN-Vlies (Viledon 1773, Firma Freudenberg) mit einer Dicke von etwa 100 µm und einem Flächengewicht von 22 g/m² wird in einem kontinuierlichen Aufwalzverfahren (Bandgeschwindigkeit ca. 8 m/h, T = 250 °C) mit obigem Schlicker beschichtet. Man erhält am Ende einen Separator mit einer mittleren Porenweite von 450 nm, der eine verbesserte Haftfestigkeit der Beschichtung als die Beschichtung auf dem Separator gemäß Beispiel 2 aufweist.

### Beispiel 7: Herstellung eines S450PET-Separators

Zu 160 g Ethanol werden zunächst 15 g einer 5 Gew.-%igen, wässrigen HCl-Lösung, 10 g Tetraethoxysilan, 2,5 g Methyltriethoxysilan und 7,5 g Dynasilan MEMO gegeben. In diesem Sol, das zunächst für einige Stunden gerührt wurde, werden dann jeweils 130 g der Aluminiumoxide Martoxid MZS-1 und Martoxid MZS-3 suspendiert. Dieser Schlicker wird für mindestens weitere 24 h mit einem Magnetrührer homogenisiert, wobei das Rührgefäß abgedeckt werden muss, damit es nicht zu einem Lösemittelverlust kommt.

Ein PET-Vlies mit einer Dicke von ca. 30 µm und einem Flächengewicht von etwa 20 g/m2 wird in einem kontinuierlichen Aufwalzverfahren (Bandgeschwindigkeit ca. 8 m/h, T = 200 °C) mit obigem Schlicker beschichtet. Man erhält am Ende einen Separator mit einer mittleren Porenweite von 450 nm, der eine verbesserte Haftfestigkeit als der in Beispiel 1 beschriebene Separator aufweist.

### Beispiel 8: Herstellung eines Z450PAN-Separators

10 g einer 70 Gew.-%igen Lösung von Zirkoniumpropylat in Propanol werden in 340 g Propanol gelöst. Zu dieser Lösung gibt man unter kräftigem Rühren 0,72 g Wasser und 0,04 g konzentrierte Salzsäure. Dieses Sol wird für einige Stunden weiter gerührt.

Ein PAN-Vlies (Viledon 1773, Firma Freudenberg) mit einer Dicke von etwa 100 µm und einem Flächengewicht von 22 g/m² wird damit in einem kontinuierlichen Aufwalzverfahren (Bandgeschwindigkeit ca. 8 m/h, T = 200 °C) mit diesem Sol beschichtet.

In einem Gemisch aus 150 g entionisiertem Wasser und 22,5 g Ethanol werden 1,4 g Zirkoniumacetylacetonat gelöst. In dieser Lösung werden jeweils 140g MZS-1 und MZS-3 suspendiert und der Schlicker mindestens 24 h gerührt. Etwa 1 Stunde vor der Beschichtung werden nochmals 75 g eines kommerziellen 30 Gew.-%igen Zirkoniumnitratsols (MEL Chemicals) dem Schlicker zugefügt.

Das vorbeschichtete PAN-Vlies wird dann in einem zweiten kontinuierlichen Aufwalzverfahren (Bandgeschwindigkeit ca. 8 m/h, T = 250 °C) mit diesem Schlicker beschichtet. Man erhält am Ende einen Separator mit einer mittleren Porenweite von 450 nm, der eine sehr gute Haftfestigkeit aufweist und sehr beständig auch in sehr alkalischen Medien ist (pH > 10).

### Beispiel 9: Gurley-Zahlen erfindungsgemäßer Separatoren

Die in nachfolgender Tabelle 2 zusammengefassten Gurley-Zahlen wurden für die verschiedenen Separatoren aus den Beispielen 1 bis 8 gemäß der in G. Venugopal; J. of Power Sources 77 (1999) 34 - 41 beschriebenen Methode bestimmt.

**Tabelle 2**

| Beispiel: | Material | Gurley-Zahl |
|---|---|---|
| 1 und 7 | S 450 PET | 2 |
| 8 | Z 450 PAN | 3 |
| 6 | S 450 PAN | 3 |
| 3 | S 450 PO | 2,5 |
| 2 | S 240 PAN | 4 |
| 4 | S 100 PET | 8 |
| 5 | S 100 PAN | 13 |

### Beispiel 10: Benetzbarkeit erfindungsgemäßer Separatoren

Ein Separator gemäß Beispiel 7 wird mit einem Lösemittel bzw. Lösemittel/Elektrolyt-Gemisch in Kontakt gebracht. Zunächst wird die Zeit gemessen, bis zu der das Lösemittel eine Höhe von 1 cm benetzt hat. Bei Verwendung von Propylencarbonat dauert dies etwa 180 Sek., bei Verwendung von Ethylencarbonat / 2M LiClO₄ etwa 1450 Sek.. Der Separator ist also sehr gut benetzbar. Viele organische Separatoren lassen sich mit Ethylencarbonat/ 2M LiClO₄ praktisch nicht benetzen.

Die trockenen Separatoren nehmen im Falle von Propylencarbonat 72 % und im Falle von Ethylencarbonat / 2M LiClO₄ 148 % vom Trockengewicht auf.

### Beispiel 11: Leitfähigkeit von mit Elektrolyt infiltrierten Separatoren

Die gemäß Beispiel 4 und 7 hergestellten Separatoren werden mit LiPF₆ infiltriert. Danach wird mittels Impedanzspektroskopie die Leitfähigkeit ermittelt. Für den S100PET-Separator aus Beispiel 4 ergibt sich ein Wert von ca. 6 Ωcm² und für den S450PET- Separator aus Beispiel 7 ein Wert von 5 Ωcm².

### Beispiel 12: Alkalische Zelle mit einem ZZ240PAN

10 g einer 70 Gew.-%ige Lösung von Zirkoniumpropylat in Propanol werden in 340 g Propanol gelöst. Zu dieser Lösung gibt man unter kräftigem Rühren 0,72 g Wasser und 0,04 g konzentrierte Salzsäure. Dieses Sol wird für einige Stunden weiter gerührt.

Ein PAN-Vlies mit einer Dicke von etwa 50 µm und einem Flächengewicht von ca. 25 g/m² wird damit in einem kontinuierlichen Aufwalzverfahren (Bandgeschwindigkeit ca. 8 m/h, T = 200 °C) mit diesem Sol beschichtet.

In einem Gemisch aus 150 g entionisiertem Wasser und 22,5 g Ethanol werden 1,4 g Zirkoniumacetylacetonat gelöst. In dieser Lösung werden 280 g des Zirkoniumoxids SC105 suspendiert und der Schlicker wird mindestens 24 h gerührt. Etwa 1 Stunde vor der Beschichtung werden nochmals 75 g eines kommerziellen 30 Gew.-%igen Zirkoniumnitratsols (MEL Chemicals) dem Schlicker zugefügt.

Das vorbeschichtete PAN-Vlies wird dann in einem zweiten kontinuierlichen Aufwalzverfahren (Bandgeschwindigkeit ca. 8 m/h, T = 250 °C) mit diesem Schlicker beschichtet. Man erhält am Ende einen Separator mit einer mittleren Porenweite von 450 nm, der eine sehr gute Haftfestigkeit aufweist und sehr beständig auch in sehr alkalischen Medien ist (pH > 10). Dieser Separator kann daher sehr gut in Ni/MeH- oder Ag/Zn-Batterien verwendet werden. Diese Zellen haben eine Langzeitstabilität von mindestens 100 Ladezyklen.

### Beispiel 13: Li-Ionen-Batterie mit hybridem keramischen Separator

Ein gemäß Beispiel 1 hergestellter S450PET-Separator wird in eine Li-Ionen-Zelle, bestehend aus einer Positiv-Masse ais LiCoO₂, einer Negativ-Masse bestehend aus Graphit und einem Elektrolyten aus LiPF₆ in Ethylencarbonat/ Dimethylcarbonat, eingebaut [LiCoO2 (36.3mg), Aktivmasse 86 %, // S-450-PET_2, EC/DMC 1:1, 1M LiPF6 // Graphit (17.0mg), Aktivmasse 90 %]. Es wurde das Ladeverhalten dieser Batterie überprüft. Das Ergebnis ist in Fig. 1 graphisch dargestellt. Die Batterie zeigt nach etwa 100 Zyklen nur einen geringen Abfall der Kapazität um wenige Prozentpunkte. Auch eine Erhöhung der Ladespannung von 4,1 auf 4,2 Volt im 93-ten Ladezyklus schadet der Batterie nicht.

## Patentansprüche

1. Separator, umfassend ein flächiges, mit einer Vielzahl von Öffnungen versehenes, flexibles Substrat mit einer auf und in diesem Substrat befindlichen porösen anorganischen Beschichtung, wobei das Material des Substrates ausgewählt ist aus gewebten oder ungewebten, nicht elektrisch leitfähigen Fasern,
**dadurch gekennzeichnet,**
**dass** das Substrat als Fasern Polymer- oder Naturfasern und eine Porosität von mehr als 50 % aufweist.

2. Separator gemäß Anspruch 1,
**dadurch gekennzeichnet,**
**dass** der Separator eine Dicke von kleiner 80 µm aufweist.

3. Separator gemäß einem der Ansprüche 1 oder 2,
**dadurch gekennzeichnet,**
**dass** die Polymerfasern, ausgewählt sind aus Fasern von Polyacrylnitril, Polyester, Polyimid, Polyamid, Polytetrafluorethylen und/oder Polyolefin.

4. Separator gemäß zumindest einem der Ansprüche 1 bis 3,
**dadurch gekennzeichnet,**
**dass** die Polymerfasern einen Durchmesser von 1 bis 25 µm aufweisen.

5. Separator gemäß zumindest einem der Ansprüche 1 bis 4,
**dadurch gekennzeichnet,**
**dass** das flexible Substrat eine Porosität von 50 bis 97 % aufweist.

6. Separator gemäß zumindest einem der Ansprüche 1 bis 5,
**dadurch gekennzeichnet,**
**dass** das flexible Substrat ein Vlies aus Polymerfasern ist.

7. Separator nach Anspruch 6,
**dadurch gekennzeichnet,**
**dass** das Vlies eine Dicke von 15 bis 80 µm aufweist.

8. Separator gemäß einem der Ansprüche 1 bis 7,
**dadurch gekennzeichnet,**
**dass** die auf und in dem Substrat befindliche Beschichtung ein Oxid der Metalle Al, Zr, Si, Ti und/oder Y, aufweist.

9. Separator gemäß zumindest einem der Ansprüche 1 bis 8,
**dadurch gekennzeichnet,**
**dass** der Separator eine Porosität von 10 bis 70 % aufweist..

10. Separator gemäß zumindest einem der Ansprüche 1 bis 9,
**dadurch gekennzeichnet,**
**dass** der Separator eine Reißfestigkeit von mehr als 1 N/cm aufweist.

11. Separator gemäß zumindest einem der Ansprüche 1 bis 10,
**dadurch gekennzeichnet,**
**dass** der Separator ohne Beschädigung bis auf einen Radius bis herab zu 100 m biegbar ist.

12. Separator gemäß zumindest einem der Ansprüche 1 bis 11,
**dadurch gekennzeichnet,**
**dass** der Separator ohne Beschädigung bis auf einen Radius bis herab zu 10 mm biegbar ist.

13. Verfahren zur Herstellung eines Separators gemäß zumindest einem der Ansprüche 1 bis 12,
**dadurch gekennzeichnet,**
**dass** ein flächiges, mit einer Vielzahl von Öffnungen versehenes, flexibles Substrat in und auf diesem Substrat mit einer Beschichtung versehen wird, wobei das Material des Substrates ausgewählt ist aus gewebten oder ungewebten, nicht elektrisch leitfähigen Fasern von Polymeren und/oder Naturfasern und die Beschichtung eine poröse, elektrisch isolierende, keramische Beschichtung ist.

14. Verfahren nach Anspruch 13,
**dadurch gekennzeichnet,**
**dass** ein Substrat ausgewählt aus Vliesen von Polymer- und/oder Naturfasern mit einer Beschichtung versehen wird, wobei die Beschichtung eine poröse, keramische Beschichtung ist, die auf und in das Substrat durch Aufbringen einer Suspension und zumindest einmaliges Erwärmen, bei welchem die Suspension auf und im Substrat verfestigt wird, aufgebracht wird und wobei die Suspension zumindest ein Oxid der Metalle Al, Zr, Si, Ti und/oder Y und ein Sol aufweist.

15. Verfahren gemäß Anspruch 13 oder 14,
**dadurch gekennzeichnet,**
**dass** das Sol einen Anteil an Wasser und/oder Säure kleiner 50 Gew.-% aufweist.

16. Verfahren nach einem der Ansprüche 13 bis 15,
**dadurch gekennzeichnet,**
**dass** die Suspension durch Aufdrucken, Aufpressen, Einpressen, Aufrollen, Aufrakeln, Aufstreichen, Tauchen, Spritzen oder, Aufgießen auf und in das Substrat gebracht wird.

17. Verfahren nach zumindest einem der Ansprüche 13 bis 16,
**dadurch gekennzeichnet,**
**dass** das flexible Substrat ein Vlies aus Polymerfasern ist.

18. Verfahren nach zumindest einem der Ansprüche 13 bis 17,
**dadurch gekennzeichnet,**
**dass** die Fasern ausgewählt sind aus Polyacrylnitril, Polyester, Polyimid, Polyamid, Polytetrafluorethylen oder Polyolefin.

19. Verfahren nach zumindest einem der Ansprüche 13 bis 18,
**dadurch gekennzeichnet,**
**dass** die Suspension zumindest ein Sol, zumindest ein Halbmetalloxidsol oder zumindest ein Mischmetalloxidsol oder eine Mischung dieser Sole aufweist, und durch Suspendieren zumindest einer anorganischen Komponente in zumindest einem dieser Sole hergestellt wird.

20. Verfahren nach Anspruch 19,
**dadurch gekennzeichnet,**
**dass** die Sole durch Hydrolisieren zumindest einer Metallverbindung, zumindest einer Halbmetallverbindung oder zumindest einer Mischmetallverbindung mit Wasser oder einer Säure oder eine Kombination dieser Verbindungen erhalten werden.

21. Verfahren nach Anspruch 20,
**dadurch gekennzeichnet,**
**dass** zumindest eine Metallalkoholatverbindung oder zumindest eine Halbmetallalkoholatverbindung ausgewählt aus den Alkoholatverbindungen der Elemente Zr, Al, Si, Ti und Y oder zumindest ein Metallnitrat, Metallcarbonat oder Metallhalogenid ausgewählt aus den Metallsalzen der Elemente Zr, Al, Si, Ti und Y als Metallverbindung hydrolisiert wird.

22. Verfahren nach zumindest einem der Ansprüche 13 bis 21,
**dadurch gekennzeichnet,**
**dass** als anorganische Komponente, zumindest ein Oxid, ausgewählt aus den Oxiden der Elemente Y, Zr, Al, und Ti, suspendiert wird.

23. Verfahren nach zumindest einem der Ansprüche 19 bis 22,
**dadurch gekennzeichnet,**
**dass** der Massenanteil der suspendierten Komponente dem 0,1 bis 500-fachen des eingesetzten Sols entspricht.

24. Verfahren nach zumindest einem der Ansprüche 13 bis 23,
**dadurch gekennzeichnet,**
**dass** der Suspension vor dem Aufbringen auf das Substart ein Haftvermittler beigefügt wird.

25. Verfahren nach einem der Ansprüche 13 bis 24,
**dadurch gekennzeichnet,**
**dass** das Substrat vor dem Aufbringen der Suspension durch Aufbringen eines Haftvermittlers mit einer haftvermittelnden Beschichtung auf den Fasern versehen wird.

26. Verfahren nach einem der Ansprüche 24 oder 25,
**dadurch gekennzeichnet,**
**dass** der Haftvermittler ausgewählt ist aus den organofunktionellen Silanen oder den Oxiden der Elemente Zr, Al, Si oder Ti.

27. Verfahren nach zumindest einem der Ansprüche 24 bis 26,
**dadurch gekennzeichnet,**
**dass** der Haftvermittler ausgewählt ist aus 3-Aminopropyltriethoxysilan, 2-Aminoethyl-3-aminopropyltrimethoxysilan, 3-Glycidyloxytrimethoxysilan, 3-methacryloxypropyl-trimethoxysilan, Vinyltriethoxysilan, Vinyltrimethoxysilan und Vinyltris(2-methoxy-ethoxy)silan.

28. Verfahren nach zumindest einem der Ansprüche 13 bis 27,
**dadurch gekennzeichnet,**
**dass** die auf und im Support vorhandene Suspension durch Erwärmen auf 50 bis 350 °C verfestigt wird.

29. Verfahren nach Anspruch 28,
**dadurch gekennzeichnet,**
**dass** das Erwärmen für 0,5 bis 10 Minuten bei einer Temperatur von 110 bis 280 °C erfolgt.

30. Verwendung eines Separators gemäß zumindest einem der Ansprüche 1 bis 12 als Separator in Batterien.

31. Batterie, einen Separator gemäß zumindest einem der Ansprüche 1 bis 12 aufweisend.

32. Lithiumbatterie,
**dadurch gekennzeichnet,**
**dass** sie einen Separator gemäß zumindest einem der Ansprüche 1 bis 12 aufweist.

33. Nickelmetallhydridbatterie,
**dadurch gekennzeichnet,**
**dass** sie einen Separator gemäß zumindest einem der Ansprüche 1 bis 12 aufweist.

34. Nickel-Cadmium-Batterie,
**dadurch gekennzeichnet,**
**dass** sie einen Separator gemäß zumindest einem der Ansprüche 1 bis 12 aufweist.

35. Silber-Zink-Batterie,
**dadurch gekennzeichnet,**
**dass** sie einen Separator gemäß zumindest einem der Ansprüche 1 bis 12 aufweist.

36. Zink-Luft-Batterie,
**dadurch gekennzeichnet,**
**dass** sie einen Separator gemäß zumindest einem der Ansprüche 1 bis 12 aufweist.

## Claims

1. Separator comprising a sheetlike flexible substrate having a multiplicity of openings and having a porous inorganic coating on and in said substrate, the material of said substrate being selected from woven or non-woven electrically nonconductive fibers, **characterized in that** said substrate comprises polymeric or natural fibers and has a porosity of more than 50%.

2. Separator according to Claim 1, **characterized in that** said separator has a thickness of less than 80 µm.

3. Separator according to Claim 1 or 2, **characterized in that** said polymeric fibers are selected from fibers of polyacrylonitrile, polyester, polyimide, polyamide, polytetrafluoroethylene and/or polyolefin.

4. Separator according to at least one of Claims 1 to 3, **characterized in that** said polymeric fibers are from 1 to 25 µm in diameter.

5. Separator according to at least one of Claims 1 to 4, **characterized in that** said flexible substrate has a porosity of from 50% to 97%.

6. Separator according to at least one of Claims 1 to 5, **characterized in that** said flexible substrate is a nonwoven of polymeric fibers.

7. Separator according to Claim 6, **characterized in that** said nonwoven is from 15 to 80 µm in thickness.

8. Separator according to any of Claims 1 to 7, **characterized in that** said coating on and in said substrate comprises an oxide of the metals Al, Zr, Si, Ti and/or Y.

9. Separator according to at least one of Claims 1 to 8, **characterized in that** said separator has a porosity of from 10% to 70%.

10. Separator according to at least one of Claims 1 to 9, **characterized in that** said separator has a breaking strength of more than 1 N/cm.

11. Separator according to at least one of Claims 1 to 11, **characterized in that** said separator is bendable around a radius down to 100 mm without damage.

12. Separator according to at least one of Claims 1 to 11, **characterized in that** said separator is bendable around a radius down to 10 mm without damage.

13. Process for producing a separator according to at least one of Claims 1 to 12, **characterized in that** it comprises providing a sheetlike flexible substrate having a multiplicity of openings with a coating on and in said substrate, the material of said substrate being selected from woven or non-woven electrically nonconductive fibers of polymers and/or natural fibers and said coating being a porous electrically insulating ceramic coating.

14. Process according to Claim 13, **characterized in that** a substrate selected from nonwovens of polymeric and/or natural fibers is provided with a coating, wherein said coating is a porous ceramic coating brought onto and into said substrate by applying to said substrate a suspension comprising at least one oxide of the metals Al, Zr, Si, Ti and/or Y and a sol and heating one or more times to solidify said suspension on and in said substrate.

15. Process according to Claim 13 or 14, **characterized in that** said sol comprises less than 50% by weight of water and/or acid.

16. Process according to any of Claims 13 to 15, **characterized in that** said suspension is brought onto and into said substrate by printing on, pressing on, pressing in, rolling on, knifecoating on, spreadcoating on, dipping, spraying or pouring on.

17. Process according to at least one of Claims 13 to 16, **characterized in that** said flexible substrate is a nonwoven of polymeric fibers.

18. Process according to at least one of Claims 13 to 17, **characterized in that** said fibers are selected from polyacrylonitrile, polyester, polyimide, polyamide, polytetrafluoroethylene and/or polyolefin.

19. Process according to at least one of Claims 13 to 18, **characterized in that** said suspension comprises at least one sol, at least one semimetal oxide sol or at least one mixed metal oxide sol or a mixture thereof, and is prepared by suspending at least one inorganic component in at least one of these sols.

20. Process according to Claim 19, **characterized in that** said sols are obtained by hydrolyzing at least one metal compound, at least one semimetal compound or at least one mixed metal compound using water or an acid or a combination thereof.

21. Process according to Claim 20, **characterized in that** said metal compound hydrolyzed is at least one metal alkoxide compound or at least one semimetal alkoxide compound selected from the alkoxide compounds of the elements Zr, Al, Si, Ti and Y or at least one metal nitrate, metal carbonate or metal halide selected from the metal salts of the elements Zr, Al, Si, Ti and Y.

22. Process according to at least one of Claims 13 to 21, **characterized in that** said inorganic component suspended is at least one oxide selected from the oxides of the elements Y, Zr, Al and Ti.

23. Process according to at least one of Claims 19 to 22, **characterized in that** the mass fraction of said suspended component is from 0.1 to 500 times that of the sol used.

24. Process according to at least one of Claims 13 to 23, **characterized in that** said suspension has an adhesion promoter added to it prior to said applying to said substrate.

25. Process according to any of Claims 13 to 24, **characterized in that** said substrate is provided with an adhesion-promoting coating on said fibers by application of an adhesion promoter prior to said applying of said suspension.

26. Process according to Claim 24 or 25, **characterized in that** said adhesion promoter is selected from the organofunctional silanes or the oxides of the elements Zr, Al, Si or Ti.

27. Process according to at least one of Claims 24 to 26, **characterized in that** said adhesion promoter is selected from 3-aminopropyltriethoxysilane, 2-aminoethyl-3-aminopropyltrimethoxysilane, 3-glycidyloxytrimethoxysilane, 3-methacryloyloxypropyl-trimethoxysilane, vinyltriethoxysilane, vinyltrimethoxysilane and vinyltris(2-methoxyethoxy)silane.

28. Process according to at least one of Claims 13 to 27, **characterized in that** said suspension on and in said support is solidified by heating to 50-350°C.

29. Process according to Claim 28, **characterized in that** said heating is effected at from 110-280°C for from 0.5 to 10 minutes.

30. Use of a separator according to at least one of Claims 1 to 12 as a separator in batteries.

31. Battery comprising a separator according to at least one of Claims 1 to 12.

32. Lithium battery, **characterized in that** it comprises a separator according to at least one of Claims 1 to 12.

33. Nickel metal hydride battery, **characterized in that** it comprises a separator according to at least one of Claims 1 to 12.

34. Nickel-cadmium battery, **characterized in that** it comprises a separator according to at least one of Claims 1 to 12.

35. Silver-zinc battery, **characterized in that** it comprises a separator according to at least one of Claims 1 to 12.

36. Zinc-air battery, **characterized in that** it comprises a separator according to at least one of Claims 1 to 12.

## Revendications

1. Séparateur, comprenant un substrat plan souple pourvu d'une pluralité d'ouvertures et présentant un revêtement inorganique poreux se trouvant sur et dans ce substrat, le matériau du substrat étant choisi parmi les fibres polymères tissées ou non tissées, électriquement non conductrices, **caractérisé en ce que** le substrat présente en tant que fibres des fibres polymères ou naturelles et une porosité supérieure à 50%.

2. Séparateur selon la revendication 1, **caractérisé en ce que** le séparateur présente une épaisseur inférieure à 80 µm.

3. Séparateur selon l'une quelconque des revendications 1 ou 2, **caractérisé en ce que** les fibres polymères sont choisies parmi les fibres de polyacrylonitrile, de polyester, de polyimide, de polyamide, de polytétrafluoroéthylène et/ou de polyoléfine.

4. Séparateur selon au moins l'une quelconque des revendications 1 à 3, **caractérisé en ce que** les fibres polymères présentent un diamètre de 1 à 25 µm.

5. Séparateur selon au moins l'une quelconque des revendications 1 à 4, **caractérisé en ce que** le substrat souple présente une porosité de 50 à 97%.

6. Séparateur selon au moins l'une quelconque des revendications 1 à 5, **caractérisé en ce que** le substrat souple est un non-tissé composé de fibres polymères.

7. Séparateur selon la revendication 6, **caractérisé en ce que** le non-tissé présente une épaisseur de 15 à 80 µm.

8. Séparateur selon l'une quelconque des revendications 1 à 7, **caractérisé en ce que** le revêtement se trouvant sur et dans le substrat présente une oxyde des métaux Al, Zr, Si, Ti et/ou Y.

9. Séparateur selon au moins l'une quelconque des revendications 1 à 8, **caractérisé en ce que** le séparateur présente une porosité de 10 à 70%.

10. Séparateur selon au moins l'une quelconque des revendications 1 à 9, **caractérisé en ce que** le séparateur présente une résistance à la déchirure supérieure à 1 N/cm.

11. Séparateur selon au moins l'une quelconque des revendications 1 à 10, **caractérisé en ce que** le séparateur est pliable sans dégradation jusqu'à un rayon pouvant descendre jusqu'à 100 mm.

12. Séparateur selon au moins l'une quelconque des revendications 1 à 11, **caractérisé en ce que** le séparateur est pliable sans dégradation jusqu'à un rayon pouvant descendre jusqu'à 10 mm.

13. Procédé pour la fabrication d'un séparateur selon au moins l'une quelconque des revendications 1 à 12, **caractérisé en ce qu'**un substrat plan, souple, pourvu d'une pluralité d'ouvertures est pourvu dans et sur ce substrat d'un revêtement, le matériau du substrat étant choisi parmi les fibres polymères et/ou naturelles, tissées ou non tissées, électriquement non conductrices et le revêtement étant un revêtement poreux, électriquement isolant, céramique.

14. Procédé selon la revendication 13, **caractérisé en ce qu'**un substrat choisi parmi les non-tissés de fibres polymères et/ou naturelles est pourvu d'un revêtement, le revêtement étant un revêtement poreux, céramique qui est appliqué sur et dans le substrat par l'application d'une suspension et chauffage au moins une fois, lors duquel la suspension sur et dans le substrat est solidifiée et la suspension présentant au moins un oxyde des métaux Al, Zr, Si, Ti et/ou Y et un sol.

15. Procédé selon la revendication 13 ou 14, **caractérisé en ce que** le sol présente une proportion d'eau et/ou d'acide inférieure à 50 % en poids.

16. Procédé selon l'une quelconque des revendications 13 à 15, **caractérisé en ce que** la suspension est appliquée sur et dans le substrat par impression, par compression, par pressage, au cylindre, par raclage, par enduction, par trempage, par pulvérisation ou par coulage.

17. Procédé selon au moins l'une quelconque des revendications 13 à 16, **caractérisé en ce que** le substrat souple est un non-tissé composé de fibres polymères.

18. Procédé selon au moins l'une quelconque des revendications 13 à 17, **caractérisé en ce que** les fibres sont choisies parmi le polyacrylonitrile, le polyester, le polyimide, le polyamide, le polytétrafluoroéthylène ou une polyoléfine.

19. Procédé selon au moins l'une quelconque des revendications 13 à 18, **caractérisé en ce que** la suspension présente au moins un sol, au moins un sol d'un oxyde semi-métallique ou au moins un sol d'un oxyde métallique mixte ou un mélange de ces sols et est préparée par suspension d'au moins un composant inorganique dans au moins un de ces sols.

20. Procédé selon la revendication 19, **caractérisé en ce que** les sols sont obtenus par hydrolyse d'au moins un composé métallique, d'au moins un composé semi-métallique ou d'au moins un composé métallique mixte par de l'eau ou un acide ou une combinaison de ces composés.

21. Procédé selon la revendication 20, **caractérisé en ce qu'**on hydrolyse au moins un composé d'alcoolate métallique ou au moins un composé d'alcoolate semi-métallique choisi parmi les composés d'alcoolate des éléments Zr, Al, Si, Ti et Y ou au moins un nitrate métallique, un carbonate métallique ou un halogénure métallique choisi parmi les sels métalliques des éléments Zr, Al, Si, Ti et Y comme composé métallique.

22. Procédé selon au moins l'une quelconque des revendications 13 à 21, **caractérisé en ce qu'**on met en suspension, comme composant inorganique, au moins un oxyde choisi parmi les oxydes des éléments Y, Zr, Al et Ti.

23. Procédé selon au moins l'une quelconque des revendications 19 à 22, **caractérisé en ce que** la proportion massique du composant en suspension correspond à 0,1 jusqu'à 500 fois celle du sol utilisé.

24. Procédé selon au moins l'une quelconque des revendications 13 à 23, **caractérisé en ce qu'**on ajoute un promoteur d'adhérence à la suspension avant l'application sur le substrat.

25. Procédé selon l'une quelconque des revendications 13 à 24, **caractérisé en ce que** le substrat est pourvu d'un revêtement promoteur d'adhérence sur les fibres avant l'application de la suspension par application d'un promoteur d'adhérence.

26. Procédé selon l'une quelconque des revendications 24 ou 25, **caractérisé en ce que** le promoteur d'adhérence est choisi parmi les silanes organofonctionnels ou les oxydes des éléments Zr, Al, Si ou Ti.

27. Procédé selon au moins l'une quelconque des revendications 24 à 26, **caractérisé en ce que** le promoteur d'adhérence est choisi parmi le 3-aminopropyltriéthoxysilane, le 2-aminoéthyl-3-aminopropyltriméthoxysilane, le 3-glycidyloxytriméthoxysilane, le 3-méthacryloxypropyltriméthoxysilane, le vinyltriéthoxysilane, le vinyltriméthoxysilane et le vinyltris(2-méthoxyéthoxy)silane.

28. Procédé selon au moins l'une quelconque des revendications 13 à 27, **caractérisé en ce que** la suspension présente sur et dans le support est solidifiée par chauffage à 50 jusqu'à 350°C.

29. Procédé selon la revendication 28, **caractérisé en ce que** le chauffage est réalisé pendant 0,5 à 10 minutes à une température de 110 à 280°C.

30. Utilisation d'un séparateur selon au moins l'une quelconque des revendications 1 à 12 comme séparateur dans des batteries.

31. Batterie, présentant un séparateur selon au moins l'une quelconque des revendications 1 à 12.

32. Batterie au lithium, **caractérisée en ce qu'**elle présente un séparateur selon au moins l'une quelconque des revendications 1 à 12.

33. Batterie à l'hydrure de nickel-métal, **caractérisée en ce qu'**elle présente un séparateur selon au moins l'une quelconque des revendications 1 à 12.

34. Batterie au nickel-cadmium, **caractérisée en ce qu'**elle présente un séparateur selon au moins l'une quelconque des revendications 1 à 12.

35. Batterie à l'argent-zinc, **caractérisée en ce qu'**elle présente un séparateur selon au moins l'une quelconque des revendications 1 à 12.

36. Batterie à zinc-air, **caractérisée en ce qu'**elle présente un séparateur selon au moins l'une quelconque des revendications 1 à 12.
